# EUROPÄISCHE PATENTSCHRIFT

(11) **EP 1 273 372 B1**
(45) Veröffentlichungstag und Bekanntmachung des Hinweises auf die Patenterteilung: **18.02.2009**
(21) Anmeldenummer: 02014133.9
(22) Anmeldetag: 25.06.2002
(51) Int. Cl.: B23B 51/02

(54) **Bohrer zum Bohren von Gestein**
Drill for stone
Foret pour maçonnerie

(30) Priorität: 02.07.2001 AT 5212001 U
(43) Veröffentlichungstag der Anmeldung: 08.01.2003
(73) Patentinhaber: CERATIZIT Austria Gesellschaft m.b.H., 6600 Reutte /Tirol (AT)
(72) Erfinder: Huber, Ronald, Ing., 6682 Vils (AT)

(56) Entgegenhaltungen:
- WO-A-00/25967
- GB-A- 2 201 910

## Beschreibung

Die Erfindung betrifft einen Bohrer, insbesondere zum Bohren von Gestein mit einem länglichen Schaft und wenigstens einer Schneidplatte an einem Ende, welche mindestens eine vom Umfang zur Drehachse D des Bohrers verlaufende stirnseitige Schneidkante aufweist, wobei die Schneidkante durch das Aneinandergrenzen einer in Drehrichtung des Bohrers vor der Schneidkante liegenden Spanfläche und einer in Drehrichtung des Bohrers hinter der Schneidkante liegenden Freifläche, welche miteinander einen Keilwinkel γ einschließen, gebildet wird.

Ferner betrifft die Erfindung eine Schneidplatte nach dem Oberbegriff des Anspruchs 9.

Bohrer zum Bohren von Gestein bestehen im allgemeinen aus einem zylindrischen Stahlschaft mit wendelförmig verdrillten Nuten zur Abfuhr des ausgebohrten Materials mit einem Einspannende für die Aufnahme in der Bohrmaschine sowie mit einem Bohrkopf am anderen Ende, welcher durch eine oder mehrere mit dem Stahlschaft in der Regel durch Löten verbundene Schneidplatten aus einem verschleißfesten Material, wie Hartmetall, gebildet wird.

Die Schneidplatten werden durch die Drehbewegung des Bohrers und in der Regel einer zusätzlichen der Drehbewegung überlagerten axialen Hammerbewegung einerseits auf Abrieb und andererseits auf Schlag beansprucht.

Die Forderung an derartige Bohrer ist neben einer möglichst hohen Standzeit auch eine möglichst gute Bohrleistung (Bohrfortschritt pro Zeiteinheit) zu erreichen.

Die meist verbreiteten, herkömmlichen Bohrer zum Bohren von Gestein weisen als Bohrkopf eine Schneidplatte mit zwei dachförmig aneinandergrenzenden stirnseitigen Schneidkanten auf, die entlang ihres Verlaufs vom Umfang zum Zentrum des Bohrers einen gleichbleibenden Keilwinkel aufweisen, der in der Regel im Bereich von 80° bis 100° liegt. Dieser relativ große Keilwinkel bewirkt zwar eine hohe Stabilität und Ausbruchsicherheit der Schneidkante, die insbesondere durch die Hammerbewegung des Bohrers erzielte Meißelwirkung und damit der Bohrfortschritt pro Zeiteinheit, also die Bohrleistung, ist nicht optimal.

Es hat daher in der Vergangenheit nicht an Versuchen gefehlt, insbesondere auch die Bohrleistung zu steigern.

So beschreibt beispielsweise das AT GM 4.252 einen Bohrer zum Bohren von Gestein mit einer Schneidplatte, bei welcher der Freiwinkel β der Schneidkante mit zunehmendem Abstand von der Drehachse D zunimmt und der Keilwinkel y entsprechend abnimmt.
Durch eine derartige Ausführung wird zwar eine Verbesserung der Bohrerleistung erreicht. Der kleinste Keilwinkel γ am äußeren Umfang der Schneidplatte darf jedoch nicht zu klein werden, um ein Ausbrechen der Schneidkanten an dieser Stelle zu vermeiden, so dass die Bohrleistung auch bei einem derartigen Bohrer noch nicht optimal ist.

Die DE 199 44 406 A 1 beschreibt einen Gesteinsbohrer bei dem die Freifläche sich abweichend von einem ebenen Verlauf in die Schneidplatte hinein erstreckt oder konkav ist.
Auf diese Art und Weise wird zwar der Keilwinkel γ verkleinert und damit die Bohrleistung verbessert. Wenn jedoch die gesamte Freifläche derart ausgeführt ist, kann es zu einem Ausbruch der Schneidkanten insbesondere am Randabschnitt der Schneidkante kommen. Um diesem vorzubeugen, ist es entsprechend dieser Vorveröffentlichung vorteilhaft, den unmittelbar an die Schneidkante angrenzenden Bereich der Freifläche mit einer Schutzfase mit vergleichsweise größerem Keilwinkel zu versehen, was die Bohrleistung wieder etwas verschlechtert. Darüber hinaus tritt bei einem derartigen Bohrer durch die ebene Spanfläche eine hohe Reibbeanspruchung mit dem abzutragenden Material auf, was wiederum einen vorzeitigen Verschleiß der Schneidplatte bewirkt. Darüber hinaus ist die Schneidleistung beim Zerspanen von Stahl, die insbesondere bei der Durchbohrung von Armierungen in Beton von Wichtigkeit ist, schlecht.

Die WO-A-0025967 beschreibt eine Hartmetallschneidplatte für den Einsatz in einem Bohrer, bei welcher der an der Hauptschneide gebildete Freiwinkel mit zunehmendem Abstand von der Bohrerspitze vorzugsweise stetig abnimmt, wobei die Abnahme auch in einer bestimmten Entfernung vor der Bohrerspitze beginnen kann. Vorzugsweise wird dabei entlang der Hauptschneide ein konstanter Keilwinkel eingestellt. Nachteilig bei einem derartigen Bohrer ist, dass die Bohrleistung nicht optimal ist.

Die Aufgabe der vorliegenden Erfindung ist es daher, einen Bohrer, insbesondere zum Bohren von Gestein zu schaffen, der eine gute Bohrleistung bei guter Ausbruchsicherheit der Schneidkanten sowie eine gute Verschleißbeständigkeit aufweist. Darüber hinaus soll auch die Zerspanung von Eisenwerkstoffen gut möglich sein.

Erfindungsgemäß wird dies dadurch erreicht, dass die Spanfläche zwischen einem Randabschnitt am Umfang des Bohrers und einem Abschnitt im Zentrum des Bohrers eine oder mehrere bis in die benachbarte Freifläche hineinlaufende Ausnehmungen aufweist, welche den Keilwinkel γ, zumindest in einem unmittelbar an die Schneidkante heranreichenden Längsabschnitt, gegenüber den übrigen Schneidkantenabschnitten, verkleinern.

Durch die Ausnehmungen in der Spanfläche wird eine Verkleinerung des Keilwinkels γ und damit eine bessere Bohrleistung des Bohrers erzielt. Dadurch, dass ein Spanflächenabschnitt im Zentrum und am Rande des Bohrers ohne diese Ausnehmungen ausgeführt ist, wird die Stabilität der Schneidkante an diesen extrem gefährdeten Zonen verstärkt. Damit können die Ausnehmungen in den dazwischenliegenden Abschnitten ohne Stützfase bis zur Schneidkante heranreichen und in die benachbarte Freifläche hineinlaufen, so dass es dadurch zu einer äußerst günstigen Meißelwirkung kommt, ohne dass ein Ausbrechen der Schneidkanten zu befürchten ist. Da der Spanflächenabschnitt im Zentrum des Bohrers keine Ausnehmungen aufweist und die Ausnehmungen der Spanfläche im angrenzenden Bereich bis in die benachbarte Freifläche hineinlaufen, treten die Schneidkantenabschnitte an der Bohrerspitze gegenüber den benachbarten Schneidkantenabschnitten etwas hervor und es wird eine gute Zentrierwirkung des Bohrers erreicht. Dadurch, dass die Ausnehmungen in der Spanfläche eingebracht sind, ergibt sich zudem eine Art von Spanleitstufe, die den Abtransport des abgetragenen Materials verbessert und die Reibungswirkung verringert. Dadurch wird der Verschleiß des Bohrers deutlich herabgesetzt. Zudem wird durch die auf diese Weise fast durchgehend sehr scharfkantigen Schneidkanten auch beim Zerspanen von Stahl eine sehr gute Schneidwirkung erzielt und die durch die Drehbewegung ablaufenden Späne werden aufgrund der Ausnehmungen gut umgelenkt bzw. abgeführt.

Besonders bewährt hat es sich, wenn der durch die Ausnehmungen verkleinerte Keilwinkel γ₁ in einem Bereich zwischen 50° und 70° liegt, während der Keilwinkel γ entlang der übrigen Schneidkantenabschnitte in einem Bereich zwischen 80° und 100° liegt.

Für die optimale Stabilität und Ausbruchsicherheit der Schneidkanten hat es sich bewährt, die Schneidplatten so auszulegen, dass die Länge y des Randabschnittes am Umfang des Bohrers im Bereich von etwa 0,37 bis 0,45 der Stärke der Schneidplatte und die Länge x des Abschnittes im Zentrum des Bohrers im Bereich von etwa 0,09 bis 0,11 des Bohrerdurchmessers liegt.

Insbesondere bei größeren Bohrerdurchmessern ist es von Vorteil, nicht nur eine, sondern zwei oder noch mehr Ausnehmungen zwischen dem Zentrumsabschnitt und dem Randabschnitt in der bzw. den Schneidplatten des Bohrers vorzusehen. Die Länge z der Spanflächenabschnitte mit großem Keilwinkel γ zwischen den einzelnen Ausnehmungen soll dann vorzugsweise im Bereich von etwa 0,07 bis 0,13 der Schneidplattenstärke liegen. Damit ergibt sich auch bei großen Bohrerdurchmessern eine optimale Stabilität der Schneidkanten.

Weiters hat es sich als vorteilhaft herausgestellt, die Ausnehmungen mit einem ebenen Mittelbereich mit seitlich und nach unten auslaufenden Rundungen auszuführen, wobei der Spanwinkel α im ebenen Mittelbereich etwa 90° beträgt.

Günstig für den Abtransport des Bohrmaterials kann es auch sein, die Ausnehmungen so vorzusehen, dass sie von der Schneidplatte bis in den Endabschnitt des Bohrerschaftes zur Aufnahme der Schneidplatte übergehen und erst dort in die wendelförmigen Nuten zum Abtransport des Bohrmaterials auslaufen.

Auf diese Art und Weise wird ein besonders guter Abtransport des abgetragenen Bohrmaterials ermöglicht.

Wenn der Bohrer mit einer einstückigen Schneidplatte mit zwei dachförmig zulaufenden stirnseitigen Schneidkanten ausgeführt ist, hat es sich bewährt, die Schneidkanten mit einem Spitzenwinkel δ von etwa 130° zulaufen zu lassen.

Weiters ist es von Vorteil, wenn die zwei dachförmig zulaufenden stirnseitigen Schneidkanten des Bohrers jeweils in zwei unterschiedliche Abschnitte unterteilt sind und dass die jeweils aneinandergrenzenden zentralen Schneidkantenabschnitte einen Spitzenwinkel δ₁ von etwa 130° und die beiden umfangseitigen Schneidenabschnitte einen spitzen Winkel δ₂ von mehr als 130°, vorzugsweise 150° miteinander einschließen. Dadurch wird erreicht, dass gezielt der Bereich der Schneidkante der verschleißmäßig am stärksten beansprucht wird, durch zusätzliche Materialanhäufung verstärkt wird.

Im folgenden wird die Erfindung an Hand von Figuren näher erläutert.
Es zeigen:
- Fig. 1: eine perspektivische Ansicht des Bohrkopfes eines erfindungsgemäßen Bohrers
- Fig. 2: den Bohrkopf nach Fig. 1 in Vorderansicht senkrecht zu den Hauptschneidkanten
- Fig. 3: den Bohrkopf nach Fig. 1 in Seitenansicht parallel zu den Hauptschneidkanten
- Fig. 4: den Bohrkopf nach Fig. 1 in Draufsicht auf die Stirnseite
- Fig. 5: die Schneidplatte nach Fig. 4 im Schnitt A-A
- Fig. 6: die Schneidplatte nach Fig. 4 im Schnitt B-B
- Fig. 7: eine Variante einer Schneidplatte für einen erfindungsgemäßen Bohrer in Vorderansicht senkrecht zu den Hauptschneidkanten

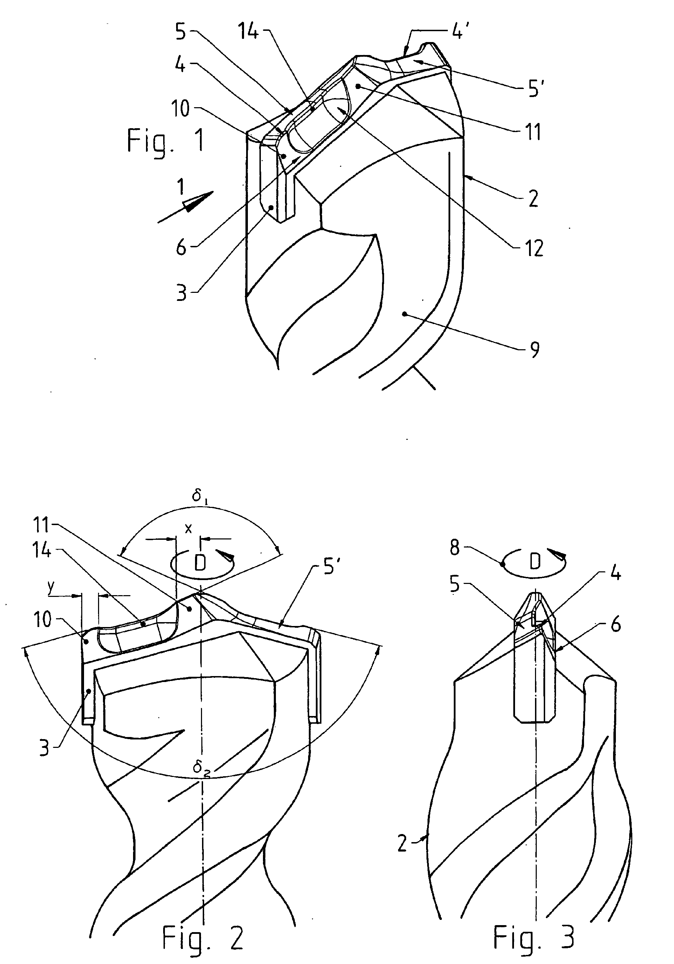

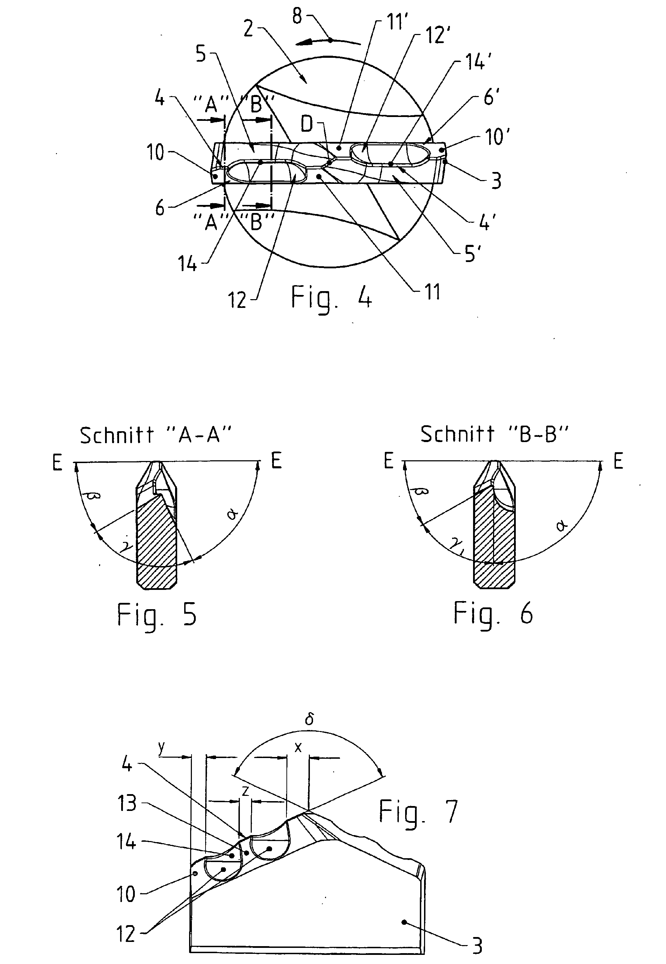

Entsprechend den Figuren 1 bis 3 weist der erfindungsgemäße Bohrer -1-einen nur teilweise dargestellten, länglichen Schaft -2- mit wendelförmig verdrallten Nuten -9- zur Abfuhr des ausgebohrten Materials auf. Die Drehrichtung des Bohrers um die Drehachse D ist durch den Pfeil -8-angedeutet. Zur Ausbildung des Bohrkopfes ist das Ende des Schaftes -2- mit einem Schlitz quer zur Drehachse D des Bohrers -1- versehen, in den mit etwas umfangsseitigem Überstand eine Schneidplatte -3- aus Hartmetall eingelötet ist. Die Schneidplatte -3- weist zwei dachförmig aneinandergrenzende Schneidkanten -4,4'- auf, wobei jede Schneidkante -4,4'zwei unterschiedlich geneigte Abschnitte aufweist. Die im Zentrum des Bohrers -1- aneinandergrenzenden Abschnitte der Schneidkanten -4,4'schließen miteinander einen Spitzenwinkel δ₁ von 130° ein, während die Abschnitte der Schneidkanten -4,4'- am Umfang des Bohrers -1- einen Spitzenwinkel δ₂ von 150° miteinander einschließen. Die Schneidkanten -4,4'werden durch das Aneinandergrenzen der Spanflächen -6,6'- und der Freiflächen -5,5'- unter Einschluss eines Keilwinkels γ gebildet. Die Spanflächen -6,6'- weisen mit Ausnahme von Randabschnitten -10,10'- am Umfang des Bohrers -1- und Abschnitten -11,11'- im Zentrum des Bohrers -1-jeweils eine Ausnehmung -12,12'- auf. Der Keilwinkel γ in diesen Randabschnitten -10,10'- und Abschnitten -11,11'- im Zentrum des Bohrers beträgt 90°. Die Ausnehmungen -12,12'- laufen bis in die benachbarten Freiflächen -5,5'- hinein und weisen jeweils einen ebenen Mittelbereich -14,14'auf, der seitlich und nach unten mit Rundungen ausläuft. Durch diese Ausnehmungen -12,12'- wird der in den Randbereichen -10,10'- und Zentrumsabschnitten -11,11'- vorliegende Keilwinkel γ von 90°, im Mittelbereich -14,14'- dieser Ausnehmungen -12,12'- auf einen Keilwinkel γ₁ von 60° verkleinert. Der Spanwinkel α im Mittelbereich -14,14'- beträgt 90°. Die entsprechenden Winkelverhältnisse sind klar in den Figuren 5 und 6 dargestellt, die einen Schnitt A-A durch die Schneidplatte -3- im Randabschnitt -10- und einen Schnitt B-B in der Mitte der Ausnehmung -12-wiedergeben.
Die Figur 7 zeigt eine Variante einer Schneidplatte für einen erfindungsgemäßen Bohrer-1-, bei der jede Schneidkante -4,4'- jeweils zwei Ausnehmungen -12,12'- aufweist, die den Keilwinkel γ verkleinern. Darüber hinaus sind bei dieser Variante die Schneidkanten -4,4'- nicht mit zwei unterschiedlich geneigten Abschnitten ausgeführt und schließen einen einzigen Spitzenwinkel δ von 130° miteinander ein.

Die Figuren stellen besonders vorteilhafte Ausgestaltungen der Erfindung dar. Die Erfindung ist jedoch keinesfalls darauf beschränkt.
So kann die Schneidplatte, insbesondere nicht einstückig ausgeführt, sondern geteilt sein und es können auch mehrere winkelmäßig zueinander versetzte Schneidplatten zur Ausbildung des Bohrkopfes vorgesehen sein.

## Patentansprüche

1. Bohrer (1), insbesondere zum Bohren von Gestein mit einem länglichen Schaft (2) und wenigstens einer Schneidplatte (3) an einem Ende, welche mindestens eine vom Umfang zur Drehachse D des Bohrers (1) verlaufende stirnseitige Schneidkante (4,4') aufweist, wobei die Schneidkante (4,4') durch das Aneinandergrenzen einer in Drehrichtung des Bohrers (1) vor der Schneidkante (4,4') liegenden Spanfläche (6,6') und einer in Drehrichtung des Bohrers (1) hinter der Schneidkante (4,4') liegenden Freifläche (5,5'), welche miteinander einen Keilwinkel γ einschließen, gebildet wird,
**dadurch gekennzeichnet,**
**dass** die Spanfläche (6,6') zwischen einem Randabschnitt (10,10') am Umfang des Bohrers (1) und einem Abschnitt (11,11') im Zentrum des Bohrers (1) eine oder mehrere bis in die benachbarte Freifläche (5,5') hineinlaufende Ausnehmungen (12,12') aufweist, welche den Keilwinkel γ, zumindest in einem unmittelbar an die Schneidkante (4,4') heranreichenden Längsabschnitt, gegenüber den übrigen Schneidkantenabschnitten, verkleinern.

2. Bohrer (1) nach Anspruch 1, **dadurch gekennzeichnet, dass** der durch die Ausnehmungen (12,12') verkleinerte Keilwinkel γ₁ in einem Bereich zwischen 50° und 70° und der Keilwinkel γ entlang der übrigen Schneidkantenabschnitte in einem Bereich zwischen 80° und 100° liegt.

3. Bohrer (1) nach Anspruch 1 oder 2, **dadurch gekennzeichnet, dass** die Länge y des Randabschnittes (10,10') am Umfang des Bohrers (1) im Bereich von etwa 0,37 bis 0,45 der Schneidplattenstärke und die Länge x des Abschnittes (11,11') im Zentrum des Bohrers (1) im Bereich von etwa 0,09 bis 0,11 des Bohrerdurchmessers liegt.

4. Bohrer (1) nach einem der Ansprüche 1 bis 3, **dadurch gekennzeichnet, dass** mehrere Ausnehmungen (12,12') vorgesehen sind und dass die Länge z der Spanflächenabschnitte (13,13') zwischen den einzelnen Ausnehmungen (12,12') im Bereich von etwa 0,07 bis 0,13 der Plattenstärke liegt.

5. Bohrer (1) nach einem der Ansprüche 1 bis 4, **dadurch gekennzeichnet, dass** die Ausnehmungen (12,12') einen ebenen Mittelbereich (14,14') mit seitlich und nach unten auslaufenden Rundungen aufweist, wobei der Spanwinkel α im Mittelbereich (14,14') der Ausnehmungen (12,12') etwa 90° beträgt.

6. Bohrer (1) nach einem der Ansprüche 1 bis 5, **dadurch gekennzeichnet, dass** die Ausnehmungen (12,12') von der Schneidplatte (3) in den Endabschnitt des Bohrerschaftes (2) zur Aufnahme der Schneidplatte (3) übergehen.

7. Bohrer (1) nach einem der Ansprüche 1 bis 6, **dadurch gekennzeichnet, dass** der Bohrer (1) eine Schneidplatte (3) mit zwei stirnseitigen Schneidkanten (4,4') aufweist, die einen Spitzenwinkel δ von etwa 130° miteinander einschließen.

8. Bohrer (1) nach einem der Ansprüche 1 bis 6, **dadurch gekennzeichnet, dass** der Bohrer (1) eine Schneidplatte (3) mit zwei stirnseitigen Schneidkanten (4,4') aufweist, wobei jede Schneidkante (4,4') in zwei unterschiedliche Abschnitte unterteilt ist und dass die jeweils aneinandergrenzenden zentralen Schneidkantenabschnitte der beiden stirnseitigen Schneidkanten (4,4') einen Spitzenwinkel δ₁ von etwa 130° und die beiden umfangsseitigen Schneidkantenabschnitte einen spitzen Winkel δ₂ von mehr als 130° vorzugsweise 150° miteinander einschließen.

9. Schneidplatte (3) zur Verwendung in einem Bohrer (1), welche mindestens eine vom Umfang zur Drehachse D des Bohrers (1) verlaufende stirnseitige Schneidkante (4,4') aufweist, wobei die Schneidkante (4,4') durch das Aneinandergrenzen einer in Drehrichtung des Bohrers (1) vor der Schneidkante (4,4') liegenden Spanfläche (6,6') und einer in Drehrichtung des Bohrers (1) hinter des Schneidkante (4,4') liegenden Freifläche (5,5'), welche miteinander einen Keilwinkel γ einschließen, gebildet wird,**dadurch gekennzeichnet, dass** die Spanfläche (6,6') zwischen einem Randabschnitt (10, 10') an Umfang des Bohrers (1) und einem Abschnitt (11, 11') in Zentrum des Bohrers (1) eine oder mehrere bis in die benachbarte Freifläche (5, 5') hineinlaufende Ausnehmungen (12, 12') aufweist, welche den Keilwinkel γ zumindest in einem unmittelbar an die Schneidkante (4, 4') heranreichenden Längsabschnitt, gegenüber den übrigen Schneidkantenabschnitten, verkleinem.

## Claims

1. Drill (1), in particular for drilling rock, with an elongated shaft (2) and at least one cutting plate (3) at one end thereof, which cutting plate (3) has on its end face at least one cutting edge (4, 4') running from the circumference to the axis of rotation D of the drill (1), the cutting edge (4, 4') being formed by the contiguity of a cutting face (6, 6') located in front of the cutting edge (4, 4') in the direction of rotation of the drill (1) and a flank (5, 5') located behind the cutting edge (4, 4') in the direction of rotation of the drill (1), which cutting face (6, 6') and flank (5, 5') include a wedge angle γ with one another, **characterised in that** the cutting face (6, 6') has one or more recesses (12, 12') extending inwards between an edge section (10, 10') at the circumference of the drill (1) and a section (11, 11') at the centre of the drill (1) as far the adjacent flank (5, 5'), which recesses (12, 12') reduce the wedge angle γ, at least in a longitudinal section extending directly to the cutting edge (4, 4'), as compared to the other sections of the cutting edge.

2. Drill (1) according to Claim 1, **characterised in that** the wedge angle γ₁ reduced by the recesses (12, 12') is within a range from 50° to 70° and the wedge angle γ along the other sections of the cutting edge is within a range from 80° to 100°.

3. Drill (1) according to Claim 1 or 2, **characterised in that** the length y of the edge section (10, 10') at the circumference of the drill (1) is within the range from approximately 0.37 to 0.45 of the thickness of the cutting plate and the length x of the section (11, 11') at the centre of the drill (1) is within the range from approximately 0.09 to 0.11 of the diameter of the drill.

4. Drill (1) according to any one of Claims 1 to 3, **characterised in that** a plurality of recesses (12, 12') are provided, and **in that** the length z of the cutting face sections (13, 13') between the individual recesses (12, 12') is within the range from approximately 0.07 to 0.13 of the thickness of the plate.

5. Drill (1) according to any one of Claims 1 to 4, **characterised in that** the recesses (12, 12') have a flat middle region (14, 14') with rounded portions running out laterally and downwardly, the cutting angle α being approximately 90° in the middle region (14, 14') of the recesses (12, 12').

6. Drill (1) according to any one of Claims 1 to 5, **characterised in that** the recesses (12, 12') merge from the cutting plate (3) into the end section of the drill shaft (2) for receiving the cutting plate (3).

7. Drill (1) according to any one of Claims 1 to 6, **characterised in that** the drill (1) has a cutting plate (3) with two end-face cutting edges (4, 4') which include with one another a point angle δ of approximately 130°.

8. Drill (1) according to any one of Claims 1 to 6, **characterised in that** the drill (1) has a cutting plate (3) with two end-face cutting edges (4, 4'), each cutting edge (4, 4') being subdivided into two different sections, and **in that** the contiguous central cutting edge sections of the two end-face cutting edges (4, 4') include a point angle δ₁ of approximately 130° and the two cutting edge sections on the circumference side include with one another a point angle δ₂ of more than 130°, preferably 150°.

9. Cutting plate (3) for use in a drill (1) which has at least one erid-face cutting edge (4, 4') running from the circumference to the axis of rotation D of the drill (1), the cutting edge (4, 4') being formed by the contiguity of a cutting face (6, 6') located in front of the cutting edge (4, 4') in the direction of rotation of the drill (1) and a flank (5, 5') located behind the cutting edge (4, 4') in the direction of rotation of the drill (1), which cutting face (6, 6') and flank (5, 5') include a wedge angle γ with one another, **characterised in that** the cutting face (6, 6') has one or more recesses (12, 12') extending inwards between an edge section (10, 10') at the circumference of the drill (1) and a section (11, 11') at the centre of the drill (1) as far the adjacent flank (5, 5'), which recesses (12, 12') reduce the wedge angle γ, at least in a longitudinal section extending directly to the cutting edge (4, 4'), as compared to the other sections of the cutting edge.

## Revendications

1. Foret (1), en particulier pour perforer de la pierre, comprenant une queue (2) de forme allongée et, à l'une de ses extrémités, au moins une plaquette de coupe (3) dotée d'au moins une arête de coupe frontale (4,4') allant du pourtour jusqu'à l'axe de rotation D du foret, dans lequel l'arête de coupe (4,4') est formée par la contiguïté d'une face d'attaque (6,6') située -vue dans le sens de rotation du foret (1)- devant l'arête de coupe (4,4') et d'une face de dépouille (5,5') située -vue dans le sens de rotation du foret (1)-derrière l'arête de coupe (4,4'), lesdites faces formant entre elles un angle de tranchant γ, **caractérisé en ce que** la face d'attaque (6,6') compote, entre un secteur périphérique (10,10') près du pourtour du foret (1) et un secteur (11,11') au centre du foret (1), un ou plusieurs creux (12,12') qui se poursuivent dans la face de dépouille (5,5') adjacente et qui, au moins dans un secteur longitudinal bordant directement l'arête de coupe (4,4'), réduisent l'angle de tranchant γ par rapport aux autres secteurs de l'arête de coupe.

2. Foret (1) selon la revendication 1, **caractérisé en ce que** l'angle de tranchant γ₁ réduit par les creux (12,12') est un angle compris entre 50° et 70°, l'angle de tranchant γ le long des autres secteurs de l'arête de coupe étant un angle compris entre 80° et 100°.

3. Foret (1) selon la revendication 1 ou 2, **caractérisé en ce que** la longueur y du secteur périphérique (10,10') près du pourtour du foret (1) est de l'ordre de 0,37 à 0,45 fois l'épaisseur de la plaquette de coupe (3) et **en ce que** la longueur x du secteur (11,11') au centre du foret (1) est de l'ordre de 0,09 à 0,11 fois le diamètre du foret.

4. Foret (1) selon l'une quelconque des revendications 1 à 3, **caractérisé en ce qu'**une pluralité de creux (12,12') est prévue et **en ce que** la longueur z des secteurs de la face d'attaque (6,6') situés entre les différents creux (12,12') est de l'ordre de 0,07 à 0,13 fois l'épaisseur de la plaquette.

5. Foret (1) selon l'une quelconque des revendications 1 à 4, **caractérisé en ce que** les creux (12,12') comportent une zone centrale (14,14') plane dont les bords latéraux s'arrondissent vers le bas, l'angle d'attaque α dans la zone centrale (14,14') des creux (12,12') étant un angle d'environ 90°.

6. Foret (1) selon l'une quelconque des revendications 1 à 5, **caractérisé en ce que** les creux (12,12') se poursuivent de la plaquette de coupe (3) jusque dans la partie extrême de la queue de foret (2) qui reçoit la plaquette (3).

7. Foret (1) selon l'une quelconque des revendications 1 à 6, **caractérisé en ce que** ledit foret (1) comporte une plaquette de coupe (3) dotée de deux arêtes de coupe frontales (4,4') qui forment entre elles un angle de sommet δ d'environ 130°.

8. Foret (1) selon l'une quelconque des revendications 1 à 6, **caractérisé en ce que** ledit foret (1) comporte une plaquette de coupe (3) dotée de deux arêtes de coupe frontales (4,4'), chacune desdites arêtes étant divisée en deux secteurs différents, et **en ce que** les secteurs centraux contigus des deux arêtes de coupe frontales (4,4') forment un angle de sommet δ₁ d'environ 130°, les deux secteurs périphériques desdites arêtes formant entre eux un angle saillant δ₂ de plus de 130°, de préférence de 150°.

9. Plaquette de coupe (3) destinée à la mise en oeuvre dans un foret (1) et dotée d'au moins une arête de coupe frontale (4,4') allant du pourtour jusqu'à l'axe de rotation D du foret, laquelle arête de coupe (4,4') est formée par la contiguïté d'une face d'attaque (6,6') située -vue dans le sens de rotation du foret (1)- devant l'arête de coupe (4,4') et d'une face de dépouille (5,5') située -vue dans le sens de rotation du foret (1)- derrière l'arête de coupe (4,4'), lesdites faces formant entre elles un angle de tranchant γ, **caractérisée en ce que** la face d'attaque (6,6') comporte, entre un secteur périphérique (10,10') près du pourtour du foret (1) et un secteur (11,11') au centre du foret (1), un ou plusieurs creux (12,12') qui se poursuivent jusque dans la face de dépouille (5,5') adjacente et réduisent l'angle de tranchant γ, au moins dans un secteur longitudinal jouxtant directement l'arête de coupe (4,4'), par rapport aux autres secteurs de l'arête de coupe.
